# EUROPÄISCHE PATENTSCHRIFT

(11) **EP 2 881 480 B1**
(45) Veröffentlichungstag und Bekanntmachung des Hinweises auf die Patenterteilung: **14.10.2020**
(21) Anmeldenummer: 13005682.3
(22) Anmeldetag: 06.12.2013
(51) Int. Cl.: C22C 32/00, F02F 3/00, C22C 26/00, B22D 21/00, B22F 3/105, B22F 3/17, B22F 3/20, B22F 5/00, C22C 14/00, C22C 21/02, C22F 1/02, C22F 1/043, C22F 1/18, B33Y 10/00, B33Y 80/00, B33Y 70/00, B23K 103/10, B23K 103/14

(54) **GEBAUTE KOLBEN FÜR ROTATIONSKOLBENMOTOREN**
FABRICATED PISTON FOR ROTATING PISTON ENGINES
PISTON INTÉGRÉ POUR MOTEURS À PISTONS ROTATIFS

(43) Veröffentlichungstag der Anmeldung: 10.06.2015
(73) Patentinhaber: Airbus Defence and Space GmbH, 85521 Ottobrunn (DE)
(72) Erfinder: Steinwandel, Jürgen, 82024 Taufkirchen (DE); Lencszowski, Blanka, 82024 Taufkirchen (DE); Sigmund, Ernst, VERSTORBEN (DE); Gollasch, Marko, 03226 Vetschau (DE)

(56) Entgegenhaltungen:
- EP-A1- 0 529 520
- EP-A2- 0 147 769
- WO-A2-2008/034042
- WO-A2-2008/063708
- GB-A- 2 112 813

## Beschreibung

Die vorliegende Erfindung betrifft einen Leichtmetallwerkstoff mit einer Zugfestigkeit bei Raumtemperatur von ≥ 180 MPa, ein Verfahren zur Herstellung eines solchen Leichtmetallwerkstoffes sowie die Verwendung eines solchen Leichtmetallwerkstoffes als Kolbenbauteil in einem Kreiskolbenmotor.

### Hintergrund der Erfindung

Gebaute Kolben sind aus der Hubkolben-Motortechnik bekannt und werden in der Regel dann eingesetzt, wenn thermische Gründe den Einsatz von reinen Leichtmetallkolben nicht zulassen. Bei Kolben besteht dann das Kolbenhemd aus einer Leichtmetalllegierung und der dem Brennraum zugewandte Teil aus einer EisenBasislegierung. Die Kraftübertragung erfolgt über Kolbenbolzen und Pleuel auf die Kurbelwelle. Bei Rotationskolben sind gebaute Kolben derzeit nicht Stand der Technik. Hier werden überwiegend Eisen-Basislegierungen als Vollkolben eingesetzt. Die innenliegende Verzahnung ist in der Regel gehärtet, z.B. durch Nitrierung bei einem Einsatzstahl oder Carborierung bei einem Gussstahl. Die innenliegende Verzahnung vermittelt die Kraft/Momentübertragung auf eine Exzenterwelle.

Die Leichtmetalle Aluminium und Titan kommen als Materialien für die Leichtmetallkomponente für gebaute Kolben in Betracht. Diese Leichtmetallkomponenten können durch konventionelle Schmiede- oder Gussverfahren, pulvermetallurgische Strangpressverfahren, pulvermetallurgische Verfahren wie Pulverbettverfahren, Laser- oder Elektronenstrahlverfahren etc. oder nicht-pulvermetallurgische generative Verfahren wie Laser- oder Plasmadrahtverfahren etc. aufgebaut werden EP0147769 A2 beschreibt eine dispersionsverstärkte Aluminiumlegierung mit guter Abnutzungs- und Hitzebeständigkeit und ein Verfahren zu ihrer Herstellung.

Die erzeugten Leichtmetallkomponenten weisen jedoch nur unzureichende Festigkeitswerte auf, so dass diese als Leichtbaukomponente von gebauten Kolben für Rotationskolbenmotoren nicht geeignet sind.

Es wäre somit wünschenswert einen Leichtmetallwerkstoff bereitzustellen, der, im Vergleich zu herkömmlichen Leichtmetallwerkstoffen, verbesserte Festigkeitswerte aufweist. Ausserdem ist es wünschenswert einen Leichtmetallwerkstoff bereitzustellen, der als Material für die Leichtmetallkomponente von gebauten Kolben für Rotationskolbenmotoren eingesetzt werden kann. Ferner ist es wünschenswert eine Reduktion des Kolbengewichts und damit eine Verbesserung des Leistungsgewichtes des Kreiskolbens zu erzielen.

Aufgabe der vorliegenden Erfindung ist daher, einen Leichtmetallwerkstoff zur Verfügung zu stellen, der im Vergleich zu herkömmlichen Leichtmetallwerkstoffen, verbesserte Festigkeitswerte aufweist. Eine weitere Aufgabe der vorliegenden Erfindung ist, dass der Leichtmetallwerkstoff als Material für die Leichtmetallkomponente von gebauten Kolben für Rotationskolbenmotoren eingesetzt werden kann. Ferner ist eine Aufgabe der vorliegenden Erfindung, dass der Leichtmetallwerkstoff zu einem geringen Kolbengewicht führt eine somit zu einer Verbesserung des Leistungsgewichtes des Kreiskolbens beiträgt. Eine weitere Aufgabe der vorliegenden Erfindung ist es, ein Verfahren zur Herstellung eines solchen Leichtmetallwerkstoffes zur Verfügung zu stellen. Insbesondere soll dieses Verfahren einen niedrigen Fertigungsaufwand aufweisen.

Diese Aufgaben werden durch die in den Ansprüchen definierten Gegenstände gelöst. Vorteilhafte Ausführungsformen sind Gegenstand von Unteransprüchen.

### Zusammenfassung der Erfindung

Ein erster Gegenstand der vorliegenden Erfindung ist dementsprechend ein Leichtmetallwerkstoff mit einer Zugfestigkeit bei Raumtemperatur von ≥ 180 MPa, bestimmt gemäß ISO 527-2, der Leichtmetallwerkstoff umfassend
a) eine Aluminiumlegierung, wobei die Aluminiumlegierung als weitere Legierungskomponente vier Komponenten ausgewählt aus der Gruppe umfassend Silicium (Si), Scandium (Sc), Kupfer (Cu), Magnesium (Mg), Nickel (Ni), Vanadium (V), Titan (Ti), Zirkon (Zr), Ytterbium (Y), Mangan (Mn), Hafnium (Hf), Niob (Nb), Tantal (Ta) oder Mischungen hiervon in einer Menge von 0,5 bis 35,0 Gew.-% pro Element, bezogen auf das Gesamtgewicht der Aluminiumlegierung, Aluminium (Al) in einer Menge von 60,0 bis 95,0 Gew.-%, bezogen auf das Gesamtgewicht der Aluminiumlegierung, optional mindestens ein weiteres Element ausgewählt aus der Gruppe umfassend Zink (Zn), Lithium (Li), Silber (Ag), Titan (Ti), Tantal (Ta), Cobalt (Co), Chrom (Cr), Ytterbium (Y), Lanthan (La), Europium (Eu), Neodym (Nd), Gadolinium (Gd), Terbium (Tb), Dysprosium (Dy), Erbium (Er), Praseodym (Pr), Cer (Ce) oder Mischungen hiervon in einer Menge von 0,01 bis 1,0 Gew.-% pro Element, bezogen aus das Gesamtgewicht der Aluminiumlegierung, und Verunreinigungen umfasst, wobei die Summe der Legierungskomponenten 100 Gew.-% beträgt, und
b) in der Aluminiumlegierung verteilte Nanopartikel in einer Menge von 0.1 bis 15.0 Gew.-%, bezogen auf das Gesamtgewicht des Leichtmetallwerkstoffes,
   wobei die Nanopartikel einen Durchmesser von 10 bis 1000 nm aufweisen und die Nanopartikel ein Material ausgewählt aus der Gruppe umfassend Kohlenstoff, Aluminiumoxid, Zirkonoxid, Yttrium-stabilisiertes Zirkonoxid, Ceroxid, Lanthanoxid und Gemische von diesen, umfassen..

Der erfindungsgemäße Leichtmetallwerkstoff ist als Material für die Leichtmetallkomponente von gebauten Kolben für Rotationskolbenmotoren geeignet. Ein weiterer Vorteil ist, dass der Leichtmetallwerkstoff verbesserter Festigkeitswerte aufweist. Ein weiterer Vorteil ist, dass der Leichtmetallwerkstoff zu einem geringen Kolbengewicht führt und somit eine Verbesserung des Leistungsgewichtes des Kreiskolbens ermöglicht. Ein weiterer Vorteil ist, dass der Leichtmetallwerkstoff mit einem niedrigen Fertigungsaufwand hergestellt werden kann.

Beispielsweise stellt der Leichtmetallwerkstoff eine Aluminiumlegierung dar, umfassend Aluminium (Al), Magnesium (Mg) und Silicium (Si).

Die Nanopartikel weisen einen Durchmesser von 10 bis 1000 nm auf, bevorzugt von 15 bis 500 nm, weiter bevorzugt von 20 bis 250 nm und am meisten bevorzugt von 25 bis 100 nm.

Beispielsweise umfasst der Leichtmetallwerkstoff die Nanopartikel in einer Menge von 0.1 bis 12.0 Gew.-%, bezogen auf das Gesamtgewicht des Leichtmetallwerkstoffes.

Die Nanopartikel umfassen ein Material ausgewählt aus der Gruppe umfassend Kohlenstoff, Aluminiumoxid, Zirkonoxid, Yttrium-stabilisiertes Zirkonoxid, Ceroxid, Lanthanoxid und Gemische von diesen. Es ist bevorzugt, dass die Nanopartikel umfassend Kohlenstoff ausgewählt sind aus der Gruppe umfassend Fullerene, Kohlenstoff-Nanotubes, Graphane, Graphene, Graphite und Gemische von diesen.

Beispielsweise weist der Leichtmetallwerkstoff bei einer Temperatur von 250 °C eine Zugfestigkeit von ≥ 90 MPa, bestimmt gemäß ISO 527-2, auf.

Beispielsweise wird der Leichtmetallwerkstoff durch das hierin beschriebene Verfahren erhalten.

Die vorliegende Erfindung stellt ferner ein Verfahren zur Herstellung des Leichtmetallwerkstoffes zur Verfügung, das Verfahren umfassend
a) Bereitstellen einer Aluminiumlegierung,
b) Bereitstellen von Nanopartikel,
c) Inkontaktbringen der Aluminiumlegierung aus Schritt a) mit den Nanopartikeln aus Schritt b) zur Herstellung eines Leichtmetallwerkstoffes umfassend die Aluminiumlegierung und darin verteilte Nanopartikel, und
d) Wärmebehandeln des in Schritt c) erhaltenen Leichtmetallwerkstoffes in einem Temperaturbereich von 100 bis 1 200°C.

Beispielsweise erfolgt die Herstellung des Leichtmetallwerkstoffes in Schritt c) durch ein Verfahren ausgewählt aus der Gruppe umfassend Schmiedeverfahren, Gussverfahren, pulvermetallurgische Strangpressverfahren, pulvermetallurgische generative Verfahren, wie beispielsweise Additive Layer Manufacturing (ALM), Pulverbettverfahren, Laserstrahlverfahren, Elektronenstrahlverfahren, Laserpulververfahren oder Laserdüsen, und nicht-pulvermetallurgische Verfahren, wie beispielsweise Laser-Drahtverfahren oder Plasma-Drahtverfahren.

Beispielsweise erfolgt die Wärmebehandlung aus Schritt d) unter Schutzgas oder im Vakuum für eine Dauer von 10 min bis 50 h und/oder in mehreren Stufen und/oder Schritten.

Ebenso betrifft die vorliegende Erfindung die Verwendung des Leichtmetallwerkstoffes als Kolbenbauteil in einem Kreiskolbenmotor. Beispielsweise in einem Antrieb oder einer Turbine in einem Passagiertransportfahrzeug, insbesondere in Luftfahrzeugen wie Passagierflugzeugen und unbemannten Luftfahrzeugen.

### Detaillierte Beschreibung der Erfindung

Die vorliegende Erfindung betrifft einen Leichtmetallwerkstoff mit einer Zugfestigkeit bei Raumtemperatur von ≥ 180 MPa, bestimmt gemäß ISO 527-2, wobei der Leichtmetallwerkstoff
a) eine Aluminiumlegierung, wobei die Aluminiumlegierung als weitere Legierungskomponente vier Komponenten ausgewählt aus der Gruppe umfassend Silicium (Si), Scandium (Sc), Kupfer (Cu), Magnesium (Mg), Nickel (Ni), Vanadium (V), Titan (Ti), Zirkon (Zr), Ytterbium (Y), Mangan (Mn), Hafnium (Hf), Niob (Nb), Tantal (Ta) oder Mischungen hiervon in einer Menge von 0,5 bis 35,0 Gew.-% pro Element, bezogen auf das Gesamtgewicht der Aluminiumlegierung, Aluminium (Al) in einer Menge von 60,0 bis 95,0 Gew.-%, bezogen auf das Gesamtgewicht der Aluminiumlegierung, optional mindestens ein weiteres Element ausgewählt aus der Gruppe umfassend Zink (Zn), Lithium (Li), Silber (Ag), Titan (Ti), Tantal (Ta), Cobalt (Co), Chrom (Cr), Ytterbium (Y), Lanthan (La), Europium (Eu), Neodym (Nd), Gadolinium (Gd), Terbium (Tb), Dysprosium (Dy), Erbium (Er), Praseodym (Pr), Cer (Ce) oder Mischungen hiervon in einer Menge von 0,01 bis 1,0 Gew.-% pro Element, bezogen aus das Gesamtgewicht der Aluminiumlegierung, und Verunreinigungen umfasst, wobei die Summe der Legierungskomponenten 100 Gew.-% beträgt, und
b) in der Aluminiumlegierung verteilte Nanopartikel in einer Menge von 0.1 bis 15.0 Gew.-%, bezogen auf das Gesamtgewicht des Leichtmetallwerkstoffes, umfasst,
wobei die Nanopartikel einen Durchmesser von 10 bis 1000 nm aufweisen und die Nanopartikel ein Material ausgewählt aus der Gruppe umfassend Kohlenstoff, Aluminiumoxid, Zirkonoxid, Yttrium-stabilisiertes Zirkonoxid, Ceroxid, Lanthanoxid und Gemische von diesen, umfassen.

Ein Erfordernis der vorliegenden Erfindung ist demnach, dass der Leichtmetallwerkstoff eine Aluminiumlegierung umfasst.

Der Leichtmetallwerkstoff umfasst eine Aluminiumlegierung.

Die Aluminiumlegierung umfasst als weitere Legierungskomponente vier Komponenten, ausgewählt aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon.

In einer Ausführungsform der vorliegenden Erfindung umfasst die Aluminiumlegierung als weitere Legierungskomponente vier Komponenten, ausgewählt aus der Gruppe umfassend Silicium (Si), Kupfer (Cu), Magnesium (Mg), Nickel (Ni) und Eisen (Fe). Vorzugsweise umfasst die Aluminiumlegierung als weitere Legierungskomponente vier Komponenten ausgewählt aus der Gruppe umfassend Silicium (Si), Kupfer (Cu), Magnesium (Mg), Nickel (Ni) und Eisen (Fe).

Die Aluminiumlegierung umfasst Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise in einer Menge von insgesamt mindestens 88.0 Gew.-%, bezogen auf das Gesamtgewicht der Aluminiumlegierung. Beispielsweise umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise in einer Menge von insgesamt mindestens 89.0 Gew.-%, bevorzugt von insgesamt mindestens 90.0 Gew.-% und am meisten bevorzugt von insgesamt mindestens 91.0 Gew.-% bezogen auf das Gesamtgewicht der Aluminiumlegierung. In einer Ausführungsform der vorliegenden Erfindung umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise in einer Menge von insgesamt mindestens 92.0 Gew.-%, bevorzugt von insgesamt mindestens 94.0 Gew.-%, weiter bevorzugt von insgesamt mindestens 96.0 Gew.-% und am meisten bevorzugt von insgesamt mindestens 98.0 Gew.-% bezogen auf das Gesamtgewicht der Aluminiumlegierung.

In einer Ausführungsform der vorliegenden Erfindung umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel

(Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise insgesamt in einer Menge von 88.0 bis 100.0 Gew.-% oder insgesamt in einer Menge von 88.0 bis 99.99 Gew.-%, bezogen auf das Gesamtgewicht der Aluminiumlegierung. Beispielsweise umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise insgesamt in einer Menge von 88.0 bis 99.95 Gew.-%, bevorzugt von 88.0 bis 99.5 Gew.-% und am meisten bevorzugt von 88.0 bis 99.45 Gew.-% bezogen auf das Gesamtgewicht der Aluminiumlegierung. In einer Ausführungsform der vorliegenden Erfindung umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise insgesamt in einer Menge von 90.0 bis 99.5 Gew.-%, bezogen auf das Gesamtgewicht der Aluminiumlegierung. Alternativ umfasst die Aluminiumlegierung Aluminium (Al) und die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, vorzugsweise insgesamt in einer Menge von 98.0 bis 99.95 Gew.-%, bezogen auf das Gesamtgewicht der Aluminiumlegierung.

In einer Ausführungsform der vorliegenden Erfindung umfasst die Aluminiumlegierung die mindestens eine Legierungskomponente, die ausgewählt ist aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, in einer Menge von 0.5 bis 35.0 Gew.-% pro Element, bezogen auf das Gesamtgewicht der Aluminiumlegierung. Beispielsweise umfasst die Aluminiumlegierung die mindestens eine Legierungskomponente, die ausgewählt ist aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, in einer Menge von 0.5 bis 27.0 Gew.-% pro Element, bezogen auf das Gesamtgewicht der Aluminiumlegierung.

Zusätzlich oder alternativ umfasst die Aluminiumlegierung die vier weiteren Komponenten, die ausgewählt sind aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, in einer Menge von 5.0 bis 40.0 Gew.-% in Summe, bezogen auf das Gesamtgewicht der Aluminiumlegierung. Beispielsweise umfasst die Aluminiumlegierung die vier weiteren Komponenten, die ausgewählt ist aus der Gruppe umfassend Silicium (Si), Scandium (Sc), Kupfer (Cu), Magnesium (Mg), Nickel (Ni), Eisen (Fe), Vanadium (V), Titan (Ti), Zirkon (Zr), Ytterbium (Y), Mangan (Mn), Hafnium (Hf), Niob (Nb), Tantal (Ta) oder Mischungen hiervon, in einer Menge von 10.0 bis 30.0 Gew.-% in Summe, bezogen auf das Gesamtgewicht der Aluminiumlegierung.

Die Aluminiumlegierung umfasst Aluminium (Al) in einer Menge von 60.0 bis 95.0 Gew.-%, bezogen auf das Gesamtgewicht der Aluminiumlegierung. Beispielsweise umfasst die Aluminiumlegierung Aluminium (AI) in einer Menge von 70.0 bis 90.0 Gew.-% und bevorzugt in einer Menge von 70.0 bis 88.0 Gew.-%, bezogen auf das Gesamtgewicht der Aluminiumlegierung.

Um eine Aluminiumlegierung mit hoher Festigkeit zu erhalten, ist es vorteilhaft, dass die Aluminiumlegierung mindestens eine weitere Legierungskomponente, beispielsweise zwei oder drei oder vier Komponenten, ausgewählt aus der Gruppe umfassend Silicium (Si), Kupfer (Cu), Magnesium (Mg), Nickel (Ni) und Eisen (Fe) in einer bestimmten Menge umfasst.

Beispielsweise umfasst die Aluminiumlegierung die mindestens eine weitere Legierungskomponente, beispielsweise zwei oder drei oder vier Komponenten, die ausgewählt ist aus der Gruppe umfassend Silicium (Si), Kupfer (Cu), Magnesium (Mg), Nickel (Ni) und Eisen (Fe) in einer Menge von 5.0 bis 40.0 Gew.-% in Summe, bezogen auf das Gesamtgewicht der Aluminiumlegierung. In einer Ausführungsform der vorliegenden Erfindung umfasst die Aluminiumlegierung die mindestens eine weitere Legierungskomponente, beispielsweise zwei oder drei oder vier Komponenten, die ausgewählt ist aus der Gruppe umfassend Silicium (Si), Kupfer (Cu), Magnesium (Mg), Nickel (Ni) und Eisen (Fe) in einer Menge von 10.0 bis 30.0 Gew.-% in Summe und bevorzugt in einer Menge von 12.0 bis 30.0 Gew.-%, bezogen auf das Gesamtgewicht der Aluminiumlegierung.

Beispielsweise umfasst die Aluminiumlegierung Silicium (Si) in einer Menge von mehr als 8.0 Gew.-%, bezogen auf das Gesamtgewicht der Aluminiumlegierung. In einer Ausführungsform der vorliegenden Erfindung umfasst die Aluminiumlegierung Silicium (Si) in einer Menge von 8.0 bis 30.0 Gew.-%, bevorzugt in einer Menge von 10.0 bis 30.0 Gew.-%, weiter bevorzugt in einer Menge von 10.0 bis 27.0 Gew.-% und am meisten bevorzugt in einer Menge von 11.0 bis 26.0 Gew.-% bezogen auf das Gesamtgewicht der Aluminiumlegierung. Die Zulegierung von Silicium (Si) hat insbesondere den Vorteil, dass es zur Verbesserung der Zugfestigkeit beiträgt.

Zusätzlich oder alternativ umfasst die Aluminiumlegierung Kupfer (Cu) in einer Menge von 0.5 bis 10.0 Gew.-%, bezogen auf das Gesamtgewicht der Aluminiumlegierung. Beispielsweise umfasst die Aluminiumlegierung Kupfer (Cu) in einer Menge von 0.5 bis 7.0 Gew.-% und bevorzugt in einer Menge von 0.8 bis 5.0 Gew.-%, bezogen auf das Gesamtgewicht der Aluminiumlegierung. Die Zulegierung von Kupfer (Cu) hat insbesondere den Vorteil, dass es zur Verbesserung sowohl der Raumtemperaturfestigkeit als auch der Festigkeit bei höheren Temperaturen und zur Verbesserung der Zugfestigkeit beiträgt.

In einer Ausführungsform der vorliegenden Erfindung umfasst die Aluminiumlegierung Magnesium (Mg) in einer Menge von 0.5 bis 2.5 Gew.-%, bezogen auf das Gesamtgewicht der Aluminiumlegierung. Beispielsweise umfasst die Aluminiumlegierung Magnesium (Mg) in einer Menge von 0.5 bis 2.0 Gew.-% und bevorzugt in einer Menge von 0.8 bis 1.5 Gew.-%, bezogen auf das Gesamtgewicht der Aluminiumlegierung. Die Zulegierung von Magnesium (Mg) hat insbesondere den Vorteil, dass die spezifische Dichte verringert wird.

Zusätzlich oder alternativ umfasst die Aluminiumlegierung Nickel (Ni) in einer Menge von 0.5 bis 4.0 Gew.-%, bezogen auf das Gesamtgewicht der Aluminiumlegierung. Beispielsweise umfasst die Aluminiumlegierung Nickel (Ni) in einer Menge von 0.5 bis 3.0 Gew.-% und bevorzugt in einer Menge von 0.8 bis 2.5 Gew.-%, bezogen auf das Gesamtgewicht der Aluminiumlegierung. Die Zulegierung von Nickel (Ni) hat insbesondere den Vorteil, dass die thermische Stabilität und Festigkeit verbessert wird.

In einer Ausführungsform der vorliegenden Erfindung umfasst die Aluminiumlegierung Eisen (Fe) in einer Menge von 1.0 bis 8.0 Gew.-%, bezogen auf das Gesamtgewicht der Aluminiumlegierung. Beispielsweise umfasst die Aluminiumlegierung Eisen (Fe) in einer Menge von 2.0 bis 7.0 Gew.-% und bevorzugt in einer Menge von 4.0 bis 6.0 Gew.-%, bezogen auf das Gesamtgewicht der Aluminiumlegierung. Die Zulegierung von Eisen (Fe) hat insbesondere den Vorteil, dass die thermische Stabilität und Festigkeit verbessert wird.

In einer Ausführungsform der vorliegenden Erfindung umfasst der Leichtmetallwerkstoff eine Aluminiumlegierung umfassend Aluminium (Al), Magnesium (Mg) und Silicium (Si).

Beispielsweise umfasst der Leichtmetallwerkstoff eine Aluminiumlegierung umfassend Aluminium (Al), Magnesium (Mg), Kupfer (Cu), Silicium (Si) und Nickel (Ni). Vorzugsweise umfasst der Leichtmetallwerkstoff eine Aluminiumlegierung bestehend aus Aluminium (Al), Magnesium (Mg), Kupfer (Cu), Silicium (Si) und Nickel (Ni). Noch bevorzugter umfasst der Leichtmetallwerkstoff eine Aluminiumlegierung ausgewählt aus der Gruppe bestehend aus AISi12CuMgNi, AlSi18CuMgNi und AlSi12Cu4Ni2Mg.

Alternativ umfasst der Leichtmetallwerkstoff eine Aluminiumlegierung umfassend Aluminium (Al), Magnesium (Mg), Kupfer (Cu) und Silicium (Si).

Alternativ umfasst der Leichtmetallwerkstoff eine Aluminiumlegierung umfassend Aluminium (Al), Silicium (Si), Eisen (Fe) und Nickel (Ni).

In einer Ausführungsform der vorliegenden Erfindung umfasst der Leichtmetallwerkstoff eine Titanlegierung.

In einer Ausführungsform der vorliegenden Erfindung umfasst die Titanlegierung als weitere Legierungskomponente mindestens eine Komponente ausgewählt aus der Gruppe umfassend Aluminium (Al), Vanadium (V) oder Mischungen hiervon.

Beispielsweise umfasst die Titanlegierung als weitere Legierungskomponente Aluminium (Al) oder Vanadium (V). Alternativ umfasst die Titanlegierung als weitere Legierungskomponente Aluminium (Al) und Vanadium (V).

Die Titanlegierung umfasst Titan (Ti) und die mindestens eine weitere Legierungskomponente, die ausgewählt ist aus der Gruppe umfassend Aluminium (Al), Vanadium (V) oder Mischungen hiervon, vorzugsweise in einer Menge von insgesamt mindestens 88.0 Gew.-%, bezogen auf das Gesamtgewicht der Titanlegierung. Beispielsweise umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise in einer Menge von insgesamt mindestens 89.0 Gew.-%, bevorzugt von insgesamt mindestens 90.0 Gew.-% und am meisten bevorzugt von insgesamt mindestens 91.0 Gew.-% bezogen auf das Gesamtgewicht der Titanlegierung. In einer Ausführungsform der vorliegenden Erfindung umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise in einer Menge von insgesamt mindestens 92.0 Gew.-%, bevorzugt von insgesamt mindestens 94.0 Gew.-%, weiter bevorzugt von insgesamt mindestens 96.0 Gew.-% und am meisten bevorzugt von insgesamt mindestens 98.0 Gew.-% bezogen auf das Gesamtgewicht der Titanlegierung.

In einer Ausführungsform der vorliegenden Erfindung umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise insgesamt in einer Menge von 88.0 bis 100.0 Gew.-% oder insgesamt in einer Menge von 88.0 bis 99.99 Gew.-%, bezogen auf das Gesamtgewicht der Titanlegierung. Beispielsweise umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise insgesamt in einer Menge von 88.0 bis 99.95 Gew.-%, bevorzugt von 88.0 bis 99.5 Gew.-% und am meisten bevorzugt von 88.0 bis 99.45 Gew.-% bezogen auf das Gesamtgewicht der Titanlegierung. In einer Ausführungsform der vorliegenden Erfindung umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise insgesamt in einer Menge von 90.0 bis 99.5 Gew.-%, bezogen auf das Gesamtgewicht der Titanlegierung. Alternativ umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, vorzugsweise insgesamt in einer Menge von 98.0 bis 99.95 Gew.-%, bezogen auf das Gesamtgewicht der Titanlegierung.

In einer Ausführungsform der vorliegenden Erfindung umfasst die Titanlegierung die mindestens eine weitere Legierungskomponente, die ausgewählt ist aus der Gruppe umfassend Aluminium (Al), Vanadium (V) oder Mischungen hiervon, in einer Menge von 0.5 bis 10.0 Gew.-% pro Element, bezogen auf das Gesamtgewicht der Titanlegierung. Beispielsweise umfasst die Titanlegierung Titan (Ti) und die mindestens eine weitere Legierungskomponente, die ausgewählt ist aus der Gruppe umfassend Aluminium (Al), Vanadium (V) oder Mischungen hiervon, in einer Menge von 1.0 bis 8.0 Gew.-% pro Element, bezogen auf das Gesamtgewicht der Titanlegierung.

Zusätzlich oder alternativ umfasst die Titanlegierung die mindestens eine weitere Legierungskomponente, die ausgewählt ist aus der Gruppe umfassend Aluminium (Al), Vanadium (V) oder Mischungen hiervon, in einer Menge von 2.0 bis 15.0 Gew.-% in Summe, bezogen auf das Gesamtgewicht der Titanlegierung. Beispielsweise umfasst die Titanlegierung die mindestens eine weitere Legierungskomponente, die ausgewählt ist aus der Gruppe umfassend Aluminium (Al), Vanadium (V) oder Mischungen hiervon, in einer Menge von 5.0 bis 12.0 Gew.-% in Summe, bezogen auf das Gesamtgewicht der Titanlegierung.

In einer Ausführungsform der vorliegenden Erfindung umfasst die Titanlegierung Titan (Ti) in einer Menge von 85.0 bis 98.0 Gew.-%, bezogen auf das Gesamtgewicht der Titanlegierung. Beispielsweise umfasst die Titanlegierung Titan (Ti) in einer Menge von 88.0 bis 95.0 Gew.-% und bevorzugt in einer Menge von 88.0 bis 92.0 Gew.-%, bezogen auf das Gesamtgewicht der Titanlegierung.

Um eine Titanlegierung mit hoher Festigkeit zu erhalten, ist es vorteilhaft, dass die Titanlegierung Aluminium (Al) und/oder Vanadium (V), vorzugsweise Aluminium (Al) und Vanadium (V), in einer bestimmten Menge umfasst.

Beispielsweise umfasst die Titanlegierung Aluminium (AI) in einer Menge von mehr als 2.0 Gew.-%, bezogen auf das Gesamtgewicht der Titanlegierung. In einer Ausführungsform der vorliegenden Erfindung umfasst die Titanlegierung Aluminium (AI) in einer Menge von 2.0 bis 10.0 Gew.-%, bevorzugt in einer Menge von 3.0 bis 10.0 Gew.-%, weiter bevorzugt in einer Menge von 4.0 bis 9.0 Gew.-% und am meisten bevorzugt in einer Menge von 4.0 bis 8.0 Gew.-% bezogen auf das Gesamtgewicht der Titanlegierung. Die Zulegierung von Aluminium (Al) hat insbesondere den Vorteil, dass die spezifische Dichte reduziert wird und die Festigkeit erhöht wird.

Herstellungsbedingt kann die AluminiumTitanlegierung Verunreinigungen anderer Elemente aufweisen.

In einer Ausführungsform der vorliegenden Erfindung umfasst die Aluminiumlegierung mindestens ein weiteres Element ausgewählt aus der Gruppe umfassend Zn, Li, Ag Ti, Ta, Co, Cr, Y, La, Eu, Nd, Gd, Tb, Dy, Er, Pr, Ce oder Mischungen hiervon.

Beispielsweise umfasst die Aluminiumlegierung das mindestens eine weitere Element ausgewählt aus der Gruppe umfassend Zn, Li, Ag Ti, Ta, Co, Cr, Y, La, Eu, Nd, Gd, Tb, Dy, Er, Pr, Ce oder Mischungen hiervon in einer Menge von 0.01 bis 1.0 Gew.-% pro Element, bezogen auf das Gesamtgewicht der Aluminiumlegierung.

Zusätzlich oder alternativ umfasst die Aluminiumlegierung das mindestens eine weitere Element ausgewählt aus der Gruppe umfassend Zn, Li, Ag Ti, Ta, Co, Cr, Y, La, Eu, Nd, Gd, Tb, Dy, Er, Pr, Ce oder Mischungen hiervon in

Summe maximal in einer Menge von 5.0 Gew.-%, bezogen auf das Gesamtgewicht der Aluminiumlegierung. Beispielsweise umfasst die Aluminiumlegierung das mindestens eine weitere Element ausgewählt aus der Gruppe umfassend Zn, Li, Ag Ti, Ta, Co, Cr, Y, La, Eu, Nd, Gd, Tb, Dy, Er, Pr, Ce oder Mischungen hiervon in Summe in einer Menge von 0.1 bis 5.0 Gew.-%, bezogen auf das Gesamtgewicht der Aluminiumlegierung.

Ein weiteres Erfordernis der vorliegenden Erfindung ist insbesondere, dass in der Aluminiumegierung Nanopartikel in einer Menge von 0.1 bis 15.0 Gew.-%, bezogen auf das Gesamtgewicht des Leichtmetallwerkstoff es, verteilt sind.

Unter "Nanopartikel" sind gemäß der vorliegenden Erfindung Partikel mit Teilchengrößen im Nanometer- bis in den unteren Mikrometerbereich zu verstehen. In einer Ausführungsform umfassen die in der Aluminiumlegierung verteilten Nanopartikel Partikel mit einem Durchmesser in einem Bereich von 10 bis 1000 nm. Beispielsweise umfassen die in der Aluminiumlegierung verteilten Nanopartikel Partikel mit einem Durchmesser in einem Bereich von 15 bis 500 nm, weiter bevorzugt von 20 bis 250 nm und am meisten bevorzugt von 25 bis 100 nm aufweisen. Die Verwendung von Nanopartikeln hat den Vorteil, dass dies zu einer homogeneren Verteilung der Partikel in der Aluminiumlegierung beiträgt.

Beispielsweise sind die in der Aluminiumlegierung verteilten Nanopartikel sphärisch, nicht-sphärisch oder Mischungen hiervon.

In einer Ausführungsform der vorliegenden Erfindung, sind die in der Aluminiumlegierung verteilten Nanopartikel sphärisch. Sphärische Nanopartikel liegen üblicherweise bei einem Aspektverhältnis von 1.0 bis 1.1 vor. In einer weiteren Ausführungsform der vorliegenden Erfindung, sind die in der Aluminiumlegierung verteilten Nanopartikel nicht-sphärisch. Nicht-sphärische Nanopartikel liegen bei einem Aspektverhältnis vor, der sich von sphärischen Partikeln unterscheidet, d.h. das Aspektverhältnis der nicht-sphärischen Nanopartikel ist nicht von 1.0 bis 1.1. Liegen die Nanopartikel als nicht-sphärische Partikel vor, bezieht sich der Durchmesser der Partikel vorzugsweise auf die kürzere Dimension.

Für den Leichtmetallwerkstoff ist es besonders vorteilhaft, wenn die Nanopartikel homogen in der Aluminiumlegierung verteilt sind.

Alternativ können die Nanopartikel inhomogen in der Aluminiumlegierung verteilt sein.

Ein weiteres Erfordernis der vorliegenden Erfindung ist, dass der Leichtmetallwerkstoff die in der Aluminiumlegierung verteilten Nanopartikel in einer Menge von 0.1 bis 15.0 Gew.-%, bezogen auf das Gesamtgewicht des Leichtmetallwerkstoffes, umfasst.

In einer Ausführungsform der vorliegenden Erfindung umfasst der Leichtmetallwerkstoff die in der Aluminiumlegierung verteilten Nanopartikel in einer Menge von 0.1 bis 12.0 Gew.-%, bezogen auf das Gesamtgewicht des Leichtmetallwerkstoffes. Beispielsweise umfasst der Leichtmetallwerkstoff die in der Aluminiumlegierung verteilten Nanopartikel in einer Menge von 0.1 bis 10.0 Gew.-%, bezogen auf das Gesamtgewicht des Leichtmetallwerkstoffes.

Dabei umfassen die Nanopartikel ein Material ausgewählt aus der Gruppe umfassend Kohlenstoff, Aluminiumoxid, Zirkonoxid, Yttrium-stabilisiertes Zirkonoxid, Ceroxid, Lanthanoxid und Gemische von diesen. Beispielsweise bestehen die Nanopartikel aus einem Material ausgewählt aus der Gruppe bestehennd aus Kohlenstoff, Aluminiumoxid, Zirkonoxid, Yttrium-stabilisiertes Zirkonoxid, Ceroxid, Lanthanoxid und Gemische von diesen.

Vorzugsweise umfassen die Nanopartikel Kohlenstoff. In einer Ausführungsform der vorliegenden Erfindung sind die Nanopartikel umfassend, vorzugsweise bestehend aus, Kohlenstoff ausgewählt aus der Gruppe umfassend Fullerene, Kohlenstoff-Nanotubes, Graphane, Graphene, Graphite und Gemische von diesen. Beispielsweise sind die Nanopartikel umfassend, vorzugsweise bestehend aus, Kohlenstoff ausgewählt aus der Gruppe bestehend aus Fullerene, Kohlenstoff-Nanotubes, Graphane, Graphene, Graphite und Gemische von diesen. Die Verwendung von Kohlenstoff-Nanopartikel hat den Vorteil, dass der erhaltene Leichtmetallwerkstoff sowohl eine verbesserte Festigkeit als auch verbesserte physikalische Eigenschaften, wie z.B. elektrische und thermische Leitfähigkeit, und verbesserte tribologische Eigenschaften aufweist. Zusätzlich führt die Verwendung von Kohlenstoff-Nanopartikel zu einer Reduktion der spezifischen Dichte.

Gemäß der vorliegenden Erfindung weist der Leichtmetallwerkstoff eine Zugfestigkeit bei Raumtemperatur von ≥ 180 MPa, bestimmt gemäß ISO 527-2, auf. Beispielsweise weist der Leichtmetallwerkstoff bei Raumtemperatur eine Zugfestigkeit in einem Bereich von 180 bis 1000 MPa, bestimmt gemäß ISO 527-2, auf.

Umfasst der Leichtmetallwerkstoff eine Aluminiumlegierung, weist der Leichtmetallwerkstoff vorzugsweise eine Zugfestigkeit bei Raumtemperatur in einem Bereich von 180 bis 500 MPa, bestimmt gemäß ISO 527-2, auf. Beispielsweise weist der Leichtmetallwerkstoff eine Zugfestigkeit bei Raumtemperatur in einem Bereich von 180 bis 400 MPa, bestimmt gemäß ISO 527-2, auf, wenn der Leichtmetallwerkstoff eine Aluminiumlegierung umfasst.

In einer Ausführungsform der vorliegenden Erfindung weist der Leichtmetallwerkstoff bei einer Temperatur von 250 °C zusätzlich eine Zugfestigkeit von ≥ 90 MPa, bestimmt gemäß ISO 527-2, auf.

Beispielsweise weist der Leichtmetallwerkstoff bei einer Temperatur von 250 °C eine Zugfestigkeit in einem Bereich von 90 bis 400 MPa, bestimmt gemäß ISO 527-2, auf.

Umfasst der Leichtmetallwerkstoff eine Aluminiumlegierung, weist der Leichtmetallwerkstoff vorzugsweise bei einer Temperatur von 250 °C eine Zugfestigkeit in einem Bereich von 100 bis 350 MPa, bestimmt gemäß ISO 527-2, auf. Beispielsweise weist der Leichtmetallwerkstoff bei einer Temperatur von 250 °C eine Zugfestigkeit in einem Bereich von 120 bis 300 MPa, bestimmt gemäß ISO 527-2, auf, wenn der Leichtmetallwerkstoff eine Aluminiumlegierung umfasst.

Zusätzlich oder alternativ weist der Leichtmetallwerkstoff eine Dehngrenze Rₚ bei Raumtemperatur von ≥ 150 MPa, bestimmt gemäß ISO 527-2, auf. Beispielsweise weist der Leichtmetallwerkstoff bei Raumtemperatur eine Dehngrenze Rₚ in einem Bereich von 150 bis 1000 MPa, bestimmt gemäß ISO 527-2, auf.

Umfasst der Leichtmetallwerkstoff eine Aluminiumlegierung, weist der Leichtmetallwerkstoff vorzugsweise eine Dehngrenze Rₚ bei Raumtemperatur in einem Bereich von 150 bis 500 MPa, bestimmt gemäß ISO 527-2, auf. Beispielsweise weist der Leichtmetallwerkstoff eine Dehngrenze Rₚ bei Raumtemperatur in einem Bereich von 150 bis 400 MPa, bestimmt gemäß ISO 527-2, auf, wenn der Leichtmetallwerkstoff eine Aluminiumlegierung umfasst.

Zusätzlich oder alternativ weist der Leichtmetallwerkstoff eine Bruchdehnung R_{d} bei Raumtemperatur von ≥ 0.1 %, bestimmt gemäß ISO 527-2, auf. Beispielsweise weist der Leichtmetallwerkstoff bei Raumtemperatur eine Bruchdehnung R_{d} in einem Bereich von 0.1 bis 20.0 %, bestimmt gemäß ISO 527-2, auf.

Umfasst der Leichtmetallwerkstoff eine Aluminiumlegierung, weist der Leichtmetallwerkstoff vorzugsweise eine Bruchdehnung R_{d} bei Raumtemperatur in einem Bereich von 0.1 bis 10.0 %, bestimmt gemäß ISO 527-2, auf. Beispielsweise weist der Leichtmetallwerkstoff eine Bruchdehnung R_{d} bei Raumtemperatur in einem Bereich von 0.1 bis 6.0 %, bestimmt gemäß ISO 527-2, auf, wenn der Leichtmetallwerkstoff eine Aluminiumlegierung umfasst.

Die vorliegende Erfindung betrifft auch ein Verfahren zur Herstellung eines solchen Leichtmetallwerkstoffes. Der Leichtmetallwerkstoff wird vorzugsweise durch ein Verfahren, wie nachfolgend beschrieben, hergestellt.

Das erfindungsgemäße Verfahren zur Herstellung des Leichtmetallwerkstoffes, wie vorstehend beschrieben, umfasst mindestens die Schritte:
a) Bereitstellen einer Aluminiumlegierung,
b) Bereitstellen von Nanopartikel,
c) Inkontaktbringen der Aluminiumlegierung aus Schritt a) mit den Nanopartikeln aus Schritt b) zur Herstellung eines Leichtmetallwerkstoffes umfassend die Aluminiumlegierung und darin verteilte Nanopartikel, und
d) Wärmebehandeln des in Schritt c) erhaltenen Leichtmetallwerkstoffes in einem Temperaturbereich von 100 bis 1 200°C.

Das erfindungsgemäße Verfahren eignet sich zur Herstellung des oben-genannten Leichtmetallwerkstoffes und weist einen niedrigen Fertigungsaufwand auf bei gleichzeitiger Optimierung der Festigkeitwerte.

Gemäß Schritt a) ist somit ein Erfordernis des erfindungsgemäßen Verfahrens, dass eine Aluminiumlegierung bereitgestellt wird.

Bzgl. der Aluminiumlegierung, der weiteren Legierungskomponenten und deren Mengen in der Aluminiumlegierung, wird auf die obigen Definitionen mit Bezug auf die Aluminiumlegierung und deren Ausführungsformen verwiesen.

Das Zulegieren der weiteren Legierungskomponenten zu der Aluminiumbasislegierung erfolgt nach den im Stand der Technik bekannten Verfahren. Beispielsweise erfolgt das Zulegieren der weiteren Legierungskomponenten zu der Aluminiumbasislegierung in der Schmelze. Mit Hilfe dieses Schrittes können die weiteren Legierungskomponenten homogen in der Aluminiumbasislegierung verteilt werden um die Aluminiumlegierung zu erhalten.

Typischerweise wird die Aluminiumlegierung in Pulver- oder Drahtform bereitgestellt. Alternativ, wird die Aluminiumlegierung als gesintertes, gegossenes, gewalztes, gepresstes, sprühkompaktiertes oder extrudiertes Formteil bereitgestellt. Verfahren zur Herstellung von Legierungen in Pulver- oder Drahtform oder gesinterten, gegossenen, gewalzten, gepressten, sprühkompaktierten und extrudierten Formteilen sind im Stand der Technik bekannt.

Gemäß Schritt b) des erfindungsgemäßen Verfahrens werden Nanopartikel bereitgestellt.

Bzgl. der Nanopartikel und der verwendeten Mengen in dem Leichtmetallwerkstoff, wird auf die obigen Definitionen mit Bezug auf die Nanopartikel und deren Ausführungsformen verwiesen.

Vorzugsweise werden die Nanopartikel in Form einer Vorlegierung bereitgestellt. Beispielsweise ist die Vorlegierung eine Aluminiumbasisvorlegierung. Die Vorlegierung kann die Nanopartikel in einer Menge von 1.0 bis 50.0 Gew.-%, bezogen auf das Gesamtgewicht der Vorlegierung, umfassen. Beispielsweise umfasst die Vorlegierung die Nanopartikel in einer Menge von 5.0 bis 30.0 Gew.-%, bezogen auf das Gesamtgewicht der Vorlegierung.

Gemäß Schritt c) ist ein weiteres Erfordernis des erfindungsgemäßen Verfahrens, dass die Aluminiumlegierung aus Schritt a) mit den Nanopartikeln aus Schritt b) zur Herstellung eines Leichtmetallwerkstoffes umfassend die Aluminiumlegierung und darin verteilte Nanopartikel in Kontakt gebracht wird.

Beispielsweise kann das Inkontaktbringen der Aluminiumlegierung mit den Nanopartikeln in Form einer Vorlegierung erfolgen. Vorzugsweise erfolgt das Inkontaktbringen der Aluminiumlegierung mit den Nanopartikeln in Form einer Vorlegierung unter Schutzgas, wie beispielsweise Argon. Mit Hilfe dieses Schrittes können die Nanopartikel homogen in der Aluminiumlegierung verteilt werden. Zusätzlich hat die Verwendung einer Vorlegierung den Vorteil, dass die Bildung karbidischer Phasen verhindert oder zumindest teilweise verhindert wird.

Die Nanopartikeln in Form einer Vorlegierung werden vorzugsweise einer Aluminiumlegierungsschmelze zugesetzt.

Die Herstellung der Aluminiumlegierungsschmelze kann durch eine Vielzahl unterschiedlicher Wärmequellen erfolgen. Üblicherweise erfolgt die Herstellung der Aluminiumlegierungsschmelze durch einen Laserstahl, einen Elektronenstrahl oder einen Lichtbogen. Es kann aber auch eine chemische, exotherme Reaktion verwendet werden, oder die Herstellung der Aluminiumlegierungsschmelze erfolgt kapazitiv, konduktiv oder induktiv. Auch eine beliebige Kombination dieser Wärmequellen ist zur Herstellung der Aluminiumlegierungsschmelze verwendbar.

Die Herstellung des Leichtmetallwerkstoffes in Schritt c) erfolgt nach dem im Stand der Technik bekannten Verfahren. Beispielsweise erfolgt die Herstellung des Leichtmetallwerkstoffes in Schritt c) durch ein Verfahren ausgewählt aus der Gruppe umfassend Schmiedeverfahren, Gussverfahren, pulvermetallurgische Strangpressverfahren, pulvermetallurgische generative Verfahren, wie beispielsweise Additive Layer Manufacturing (ALM), Pulverbettverfahren, Laserstrahlverfahren, Elektronenstrahlverfahren, Laserpulververfahren oder Laserdüsen, und nicht-pulvermetallurgische Verfahren, wie beispielsweise Laser-Drahtverfahren oder Plasma-Drahtverfahren erfolgt. Diese Verfahren sind im Stand der Technik bekannt.

Ein weiteres Erfordernis des erfindungsgemäßen Verfahrens ist, dass der in Schritt c) erhaltene Leichtmetallwerkstoff einer Wärmebehandlung in einem Temperaturbereich von 100 bis 1 200°C unterzogen wird. Vorzugsweise wird der in Schritt c) erhaltene Leichtmetallwerkstoff einer Wärmebehandlung in einem Temperaturbereich von 100 bis 1 200°C in Abhängigkeit von der Basislegierung unterzogen. Beispielsweise wird der in Schritt c) erhaltene Leichtmetallwerkstoff einer Wärmebehandlung in einem Temperaturbereich von 100 bis 550°C unterzogen, wenn die Basislegierung eine Aluminiumlegierung ist.

In einer Ausführungsform der vorliegenden Erfindung erfolgt die Wärmebehandlung gemäß Schritt d) des erfindungsgemäßen Verfahrens in einem Temperaturbereich von 100 bis 1 200°C, beispielsweise in einem Temperaturbereich von 100 bis 550°C bei einer Aluminiumbasislegierung, für eine Dauer von 10 min bis 50 h. Die Wärmebehandlung kann typischerweise bei Temperaturen zwischen 100 bis 1 200°C, beispielsweise in einem Temperaturbereich von 100 bis 550 °C bei einer Aluminiumbasislegierung oder in einem Temperaturbereich von 500 bis 1 200°C bei einer Titanbasislegierung, für eine Dauer von 10 min bis 10 h erfolgen. Beispielsweise erfolgt die Wärmebehandlung bei Temperaturen zwischen 100 bis 1 200°C, beispielsweise in einem Temperaturbereich von 100 bis 550°C bei einer Aluminiumbasislegierung, für eine Dauer von 10 min bis 5 h oder für eine Dauer von 30 min bis 3 h. Beispielsweise kann die Wärmebehandlung unter Luft, Schutzgas oder im Vakuum erfolgen, beispielsweise im Vakuum. Die Wärmebehandlung gemäß Schritt d) des erfindungsgemäßen Verfahrens kann auch in mehreren Stufen und/oder Schritten ausgeführt werden. Beispielsweise erfolgt die Wärmebehandlung gemäß Schritt d) des erfindungsgemäßen Verfahrens unter Schutzgas, wie Stickstoff oder Argon, bei Temperaturen zwischen 100 und 1 200°C, beispielsweise bei Temperaturen zwischen 100 und 550°C bei einer Aluminiumbasislegierung oder in einem Temperaturbereich von 500 bis 1 200°C bei einer Titanbasislegierung, für eine Dauer von 30 min bis 3 h.

Verfahren zum Wärmebehandeln von Leichtmetallwerkstoffen in einem Temperaturbereich von 100 bis 1 200°C sind im Stand der Technik bekannt. Diese Wärmebehandlung verbessert die Materialeigenschaften des Leichtmetallwerkstoffes, da Eigenspannungen im Material abgebaut werden.

In einer Ausführungsform der vorliegenden Erfindung erfolgt die Wärmebehandlung gemäß Schritt d) des erfindungsgemäßen Verfahrens direkt im Ansschluss an Schritt c), d.h. die Wärmebehandlung gemäß Schritt d) des erfundungsgemäßen Verfahrens wird direkt mit dem in Schritt c) erhaltenen Leichtmetallwerkstoff durchgeführt. Mit anderen Worten, das erfindungsgemäße Verfahren wird ohne einen oder mehrere weitere Verfahrensschritte zwischen den Verfahrensschritten c) und d) durchgeführt.

In einer Ausführungsform der vorliegenden Erfindung kann der in Schritt d) erhaltene wärmebehandelte Leichtmetallwerkstoff einer Abkühlung unterzogen werden.

Beispielsweise erfolgt die Abkühlung des in Schritt d) erhaltenen wärmebehandelten Leichtmetallwerkstoffes auf Raumtemperatur.

In einer Ausführungsform der vorliegenden Erfindung erfolgt die Abkühlung des des in Schritt d) erhaltenen wärmebehandelten Leichtmetallwerkstoffes auf Raumtemperatur mit einer Abkühlgeschwindigkeit, die ≥ 10 K/sec, und vorzugsweise ≥ 10 bis 20 K/sec, beträgt. Beispielsweise erfolgt die Abkühlung des wärmebehandelten Leichtmetallwerkstoffes auf Raumtemperatur mit einer Abkühlgeschwindigkeit in einem Bereich von ≥ 20 K/sec oder in einem Bereich von 20 K/sec bis 1000 K/sec.

Solche Verfahren zur Abkühlung wärmebehandelter Leichtmetallwerkstoffe sind im Stand der Technik bekannt. Beispielsweise kann eine definierte Abkühlung des wärmebehandelten Leichtmetallwerkstoffes auf Raumtemperatur mit Hilfe einer Kühlung an bewegter Luft oder durch Abschrecken in Wasser erfolgen.

Alternativ erfolgt die Abkühlung des in Schritt d) erhaltenen wärmebehandelten Leichtmetallwerkstoffes auf Raumtemperatur an der Luft.

Aufgrund der Vorteile, die der erfindungsgemäße Leichtmetallwerkstoff bietet, betrifft die vorliegende Erfindung auch die Verwendung des Leichtmetallwerkstoffes als Kolbenbauteil in einem Kreiskolbenmotor. Beispielsweise wird der erfindungsgemäße Leichtmetallwerkstoff als Kolbenbauteil in einem Kreiskolbenmotor in einem Antrieb oder einer Turbine in einem Passagiertransportfahrzeug verwendet, insbesondere in Luftfahrzeugen wie Passagierflugzeugen und unbemannten Luftfahrzeugen. Wie vorstehend ausgeführt, können durch den erfindungsgemäßen Leichtmetallwerkstoff Kolben für Kreiskolbenmotoren erhalten werden, die eine hohe Festigkeit aufweisen.

Um die mechanischen Kräfte bzw. Momente beim Abrollen der Exzenterwelle auf der Innenseite eines Leichtmetallkolbens langzeitmäßig aufzunehmen ist es erforderlich, dass auf der Kolbeninnenseite ein Material mit höherer Festigkeit als z.B. der erfindungsgemäße Leichtmetallwerkstoff eingesetzt wird. Dazu wird ein Inlay (Guß- oder Schmiedeteil oder ein generativ dargestelltes Bauteil) aus einer Eisen-oder Nickel-Basislegierung gefertigt, das die notwendige Verzahnung gegenüber der Exzenterwelle des Kreikolbenmotors aufweist. Die Verbindung dieses Inlaybauteils mit dem Deckkolben des erfindungsgemäßen Leichtmetallwerkstoffes erfolgt vorzugsweise mittels Reibschweissen, was zu einer guten Verbindung der beiden Leichtmetallwerkstoffe führt. Alternativ dazu kommt auch Diffusionsschweissen in Betracht, was aber längere Prozesszeiten beinhaltet. Darüber hinaus wird die Innenverzahnung durch Anlassen oder Aufkohlen gehärtet und des Weiteren durch Kugelstrahlen oder Laser- Schockbehandlung mit tiefreichenden Druck-Eigenspannungen versehen.

Im Hinblick auf thermomechanische Stabilität und insbesondere der Stabilität bei Titankolben gegenüber Heißgaskorrosion ist es erforderlich auf der Kolbenaussenseite entsprechende Maßnahmen zu ergreifen, die auch das Einbringen von Nuten für die Dichtleisten (Abdichtung gegenüber der Trocholde) zulassen. Dazu kann über ein generatives Verfahren, wie Laser- oder Plasma- Drahtverfahren, eine ausreichend dicke Schicht bestehend entweder aus einer Eisen-oder Nickel-Basislegierung auf den erfindungsgemäßen Leichtmetallwerkstoff aufgebracht werden (Dicke der Schicht zwischen 1 mm - 20 mm). Diese Legierungen weisen bereits eine sehr viel geringere Wärmeleitfähigkeit auf als der erfindungsgemäße Leichtmetallwerkstoff und fungieren hier sowohl als Wärmedämmschicht als auch als Heißgas-Korrosionsschutzschicht. Aufgrund der hohen spezifischen Dichte (ca. 8 g/cm³ bei Fe- Basislegierungen, ca. 9 g/cm³ bei Ni- Basislegierungen) im Vergleich zur Aluminium- (ca. 2,3- 2,7 g/cm³) oder Titanlegierungen (ca.4,3 - 4,5 g/cm³) entsteht hier ein zusätzlicher Vorteil hinsichtlich des Trägheitsmoments des gesamten Kolbens (Schwungmasse), was sich günstig hinsichtlich einer Minimierung von Drehmomentschwankungen auswirkt. Zur weiteren Reduktion der Wärmebelastung des erfindungsgemäßen Leichtmetallwerkstoffes wird als Abschluss eine oxidische Wärmedämmschicht (z.B. Zirkonoxid, Yttrium-stabillsiertes Zirkonoxid- ,YSZ- oder Lanthan- Hexaaluminat oder Mischungen aus den individuellen Oxiden/Mischoxiden) aufgebracht. Dies erfolgt vorzugsweise über ein generatives Verfahren, wie z.B. Plasmaspritzen, Flammspritzen/ Hochgeschwindigkeits-Flammspritzen oder Laser-Pulverauftrag.

Alternativ zu dem vorab beschriebenen differentiellen Aufbau des gesamten Kolbens in mehreren Verfahrensschritten ist es auch möglich, den gesamten Kolben ausschließlich generativ herzustellen. Dazu besonders geeignet ist das Pulverbettverfahren. Dazu wird beispielsweise zunächst der Leichtmetallwerkstoff-Basiskolben aus einem entsprechenden Pulverbett hergestellt. Daran anschließend wird die Fe-oder Ni-Verzahnungskomponente über ein weiteres Pulverbett aufgebracht und daran anschließend mechanisch oder elektrochemisch auf Endmaß gebracht und weiterhin gehärtet (z.B. Plasmanitrierung und/oder Laser Shock Peening).

In einem weiteren Schritt können die Kolben- Außenbereiche entsprechend generativ dargestellt werden.

### Beispiele

Die in Tabelle 1 aufgeführten Aluminium- bzw. Titanlegierungen wurden entsprechend des angegebenen Verfahrens hergestellt:

**Tabelle 1:**

| **Legierung** | **Verfahren zur Herstellung der Legierung** |
|---|---|
| AlSi12CuMgNi | gegossen |
| | gepresst |
| AlSi18CuMgNi | gegossen |
| | gepresst |
| AlSi12Cu4Ni2Mg | gegossen |
| AlSi17Cu4Mg | gegossen |
| AlSi20Fe5Ni2 | sprühkompaktiert |
| AlSi25Cu4Mg | sprühkompaktiert |
| TiAl6V4 | gegossen |

Die in Tabelle 1 dargestellten Legierungen wurden hinsichtlich ihrer Zugfestigkeit Rₘ, Dehngrenze Rₚ und Bruchdehnung R_{d} untersucht. Die Ergebnisse sind in Tabelle 2 dargestellt.

**Tabelle 2:**

| **Legierung** | **Verfahren zur Herstellung der Legierung** | **Temperatur [°C]** | **R_{p0,2} [MPa]** | **Rₘ [MPa]** | **R_{d} [MPa]** |
|---|---|---|---|---|---|
| AlSi12CuMgNi | gegossen | RT | 190-230 | 200-250 | 0,3-1,5 |
| | gepresst | RT | 280-310 | 300-370 | 1-3 |
| | gegossen | 250 | 80-110 | 100-150 | - |
| | gepresst | 250 | 90-120 | 110-170 | - |
| | gegossen | 300 | 50-80 | 80-100 | - |
| AlSi18CuMgNi | gegossen | RT | 170-200 | 180-230 | 0,2-1 |
| | gepresst | RT | 220-280 | 230-300 | 0,5-1,5 |
| | gegossen | 250 | 90-125 | 110-140 | -- |
| | gepresst | 250 | 90-125 | 100-160 | -- |
| | gegossen | 300 | 60-80 | 90-130 | -- |
| AlSi12Cu4Ni2Mg | gegossen | RT | 200-280 | 210-290 | 0,1-0,5 |
| | gegossen | 250 | 100-150 | 130-180 | -- |
| | gegossen | 300 | 85-100 | 100-120 | -- |
| AlSi17Cu4Mg | gegossen | RT | 210-230 | 180-220 | 0,2-1 |
| AlSi20Fe5Ni2 | sprühkompaktiert | RT | 240 | 360 | 2 |
| AlSi25Cu4Mg | sprühkompaktiert | RT | 180 | 250 | 1 |
| TiAl6V4 | gegossen | RT | 880 | 950 | 14 |

| | | | | | |
|---|---|---|---|---|---|
| RT: Raumtemperatur R_{p0,2}: Dehngrenze, bestimmt gemäß ISO 527-2 Rₘ: Zugfestigkeit, bestimmt gemäß ISO 527-2 R_{d}: Bruchdehnung, bestimmt gemäß ISO 527-2 | | | | | |

Wie der Tabelle 2 entnommen werden kann, weist der erfindungsgemäße Leichtmetallwerkstoff eine Zugfestigkeit bei Raumtemperatur von ≥ 180 MPa, bestimmt gemäß ISO 527-2, auf. Darüber hinaus weist der erfindungsgemäße Leichtmetallwerkstoff eine Zugfestigkeit bei einer Temperatur von 250 °C von ≥ 90 MPa, bestimmt gemäß ISO 527-2, auf.

## Patentansprüche

1. Leichtmetallwerkstoff mit einer Zugfestigkeit bei Raumtemperatur von ≥ 180 MPa, bestimmt gemäß ISO 527-2, der Leichtmetallwerkstoff umfassend
a) eine Aluminiumlegierung,
wobei die Aluminiumlegierung als weitere Legierungskomponente vier Komponenten ausgewählt aus der Gruppe umfassend Silicium (Si), Scandium (Sc), Kupfer (Cu), Magnesium (Mg), Nickel (Ni), Vanadium (V), Titan (Ti), Zirkon (Zr), Ytterbium (Y), Mangan (Mn), Hafnium (Hf), Niob (Nb), Tantal (Ta) oder Mischungen hiervon in einer Menge von 0,5 bis 35,0 Gew.-% pro Element, bezogen auf das Gesamtgewicht der Aluminiumlegierung, Aluminium (Al) in einer Menge von 60,0 bis 95,0 Gew.-%, bezogen auf das Gesamtgewicht der Aluminiumlegierung, optional mindestens ein weiteres Element ausgewählt aus der Gruppe umfassend Zink (Zn), Lithium (Li), Silber (Ag), Titan (Ti), Tantal (Ta), Cobalt (Co), Chrom (Cr), Ytterbium (Y), Lanthan (La), Europium (Eu), Neodym (Nd), Gadolinium (Gd), Terbium (Tb), Dysprosium (Dy), Erbium (Er), Praseodym (Pr), Cer (Ce) oder Mischungen hiervon in einer Menge von 0,01 bis 1,0 Gew.-% pro Element, bezogen aus das Gesamtgewicht der Aluminiumlegierung, und Verunreinigungen umfasst, wobei die Summe der Legierungskomponenten 100 Gew.-% beträgt, und
b) in der Aluminiumlegierung verteilte Nanopartikel in einer Menge von 0.1 bis 15.0 Gew.-%, bezogen auf das Gesamtgewicht des Leichtmetallwerkstoffes,
wobei die Nanopartikel einen Durchmesser von 10 bis 1000 nm aufweisen und die Nanopartikel ein Material ausgewählt aus der Gruppe umfassend Kohlenstoff, Aluminiumoxid, Zirkonoxid, Yttrium-stabilisiertes Zirkonoxid, Ceroxid, Lanthanoxid und Gemische von diesen, umfassen.

2. Der Leichtmetallwerkstoff gemäß Anspruch 1, wobei die Nanopartikel einen Durchmesser von 15 bis 500 nm, weiter bevorzugt von 20 bis 250 nm und am meisten bevorzugt von 25 bis 100 nm aufweisen.

3. Der Leichtmetallwerkstoff gemäß einem der vorherigen Ansprüche, wobei der Leichtmetallwerkstoff die Nanopartikel in einer Menge von 0.1 bis 12.0 Gew.-%, bezogen auf das Gesamtgewicht des Leichtmetallwerkstoffes, umfasst.

4. Der Leichtmetallwerkstoff gemäß Anspruch 1, wobei die Nanopartikel umfassend Kohlenstoff ausgewählt sind aus der Gruppe umfassend Fullerene, Kohlenstoff-Nanotubes, Graphane, Graphene, Graphite und Gemische von diesen.

5. Der Leichtmetallwerkstoff gemäß einem der vorherigen Ansprüche, wobei der Leichtmetallwerkstoff bei einer Temperatur von 250 °C eine Zugfestigkeit von ≥ 90 MPa, bestimmt gemäß ISO 527-2, aufweist.

6. Der Leichtmetallwerkstoff gemäß einem der vorherigen Ansprüche, wobei der Leichtmetallwerkstoff durch ein Verfahren gemäß einem der Ansprüche 7 bis 9 erhalten wird.

7. Verfahren zur Herstellung eines Leichtmetallwerkstoffes gemäß einem der Ansprüche 1 bis 6, das Verfahren umfassend
a) Bereitstellen einer Aluminiumlegierung gemäß Anspruch 1,
b) Bereitstellen von Nanopartikeln gemäß einem der Ansprüche 1 bis 4,
c) Inkontaktbringen der Aluminiumlegierung aus Schritt a) mit den Nanopartikeln aus Schritt b) zur Herstellung eines Leichtmetallwerkstoffes umfassend die Aluminiumlegierung und darin verteilte Nanopartikel, und
d) Wärmebehandeln des in Schritt c) erhaltenen Leichtmetallwerkstoffes in einem Temperaturbereich von 100 bis 1 200°C.

8. Verfahren gemäß Anspruch 7, wobei die Herstellung des Leichtmetallwerkstoffes in Schritt c) durch ein Verfahren ausgewählt aus der Gruppe umfassend Schmiedeverfahren, Gussverfahren, pulvermetallurgische Strangpressverfahren, pulvermetallurgische generative Verfahren, wie beispielsweise Additive Layer Manufacturing (ALM), Pulverbettverfahren, Laserstrahlverfahren, Elektronenstrahlverfahren, Laserpulververfahren oder Laserdüsen, und nicht-pulvermetallurgische Verfahren, wie beispielsweise Laser-Drahtverfahren oder Plasma-Drahtverfahren erfolgt.

9. Verfahren gemäß Anspruch 7 oder 8, wobei die Wärmebehandlung aus Schritt d) unter Schutzgas oder im Vakuum für eine Dauer von 10 min bis 50 h und/oder in mehreren Stufen und/oder Schritten erfolgt.

10. Verwendung eines Leichtmetallwerkstoffes gemäß einem der Ansprüche 1 bis 6 als Kolbenbauteil in einem Kreiskolbenmotor.

11. Verwendung gemäß Anspruch 10 in einem Antrieb oder einer Turbine in einem Passagiertransportfahrzeug, insbesondere in Luftfahrzeugen wie Passagierflugzeugen und unbemannten Luftfahrzeugen.

## Claims

1. Light metal material having a tensile strength at room temperature of ≥ 180 MPa, determined according to ISO 527-2, the light alloy material comprising
(a) an aluminium alloy, wherein the aluminium alloy comprises as a further alloy component four components selected from the group consisting of silicon (Si), scandium (Sc), copper (Cu), magnesium (Mg), nickel (Ni), vanadium (V), titanium (Ti), zirconium (Zr), ytterbium (Y), manganese (Mn), hafnium (Hf), niobium (Nb), tantalum (Ta) or mixtures thereof in an amount of 0.5 to 35.0 wt.-% per element, based on the total weight of the aluminum alloy, aluminum (Al) in an amount of 60.0 to 95.0 wt.- %, based on the total weight of the aluminum alloy, optionally at least one further element selected from the group comprising zinc (Zn), lithium (Li), silver (Ag), titanium (Ti), tantalum (Ta), cobalt (Co), chromium (Cr), ytterbium (Y), lanthanum (La), europium (Eu), neodymium (Nd), gadolinium (Gd), terbium (Tb), dysprosium (Dy), erbium (Er), praseodymium (Pr), cerium (Ce) or mixtures thereof in an amount of 0.01 to 1.0 wt. - % per element, based on the total weight of the aluminium alloy, and impurities, the sum of the alloy components being 100 wt.-%, and
b) nanoparticles dispersed in the aluminium alloy in an amount of 0.1 to 15.0 wt.-%, based on the total weight of the light metal material
wherein the nanoparticles have a diameter of 10 to 1000 nm and the nanoparticles comprise a material selected from the group comprising carbon, alumina, zirconia, yttrium-stabilized zirconia, ceria, lanthanum oxide and mixtures thereof.

2. The light metal material according to claim 1, wherein the nanoparticles have a diameter of from 15 to 500 nm, more preferably from 20 to 250 nm and most preferably from 25 to 100 nm.

3. The light metal material according to any one of the previous claims, wherein the light metal material comprises the nanoparticles in an amount of 0.1 to 12.0 % by weight based on the total weight of the light metal material.

4. The light metal material according to claim 1, wherein the nanoparticles comprising carbon are selected from the group comprising fullerenes, carbon nanotubes, graphanes, graphenes, graphites and mixtures thereof.

5. The light metal material according to any of the previous claims, wherein the light metal material has a tensile strength of ≥ 90 MPa at a temperature of 250°C, determined according to ISO 527-2.

6. The light metal material according to any of the previous claims, wherein the light metal material is obtained by a process according to any one of claims 7 to 9.

7. Process for producing a light metal material according to any one of claims 1 to 6, the process comprising
a) Providing an aluminium alloy according to claim 1,
b) Provision of nanoparticles according to one of claims 1 to 4,
c) contacting the aluminium alloy from step a) with the nanoparticles from step b) to produce a light metal material comprising the aluminium alloy and nanoparticles distributed therein, and
(d) heat treatment of the light metal material obtained in step (c) in a temperature range of 100 to 1200°C.

8. Process according to claim 7, wherein the light metal material in step c) is produced by a process selected from the group comprising forging processes, casting processes, powder metallurgical extrusion processes, powder metallurgical generative processes, such as additive layer manufacturing (ALM), powder bed processes, laser beam processes, electron beam processes, laser powder processes or laser nozzles, and non-powder metallurgical processes, such as laser wire processes or plasma wire processes.

9. Process according to claim 7 or 8, wherein the heat treatment from step d) is carried out under inert gas or in a vacuum for a duration of 10 min to 50 h and/or in several stages and/or steps.

10. Use of a light metal material according to one of Claims 1 to 6 as a piston component in a rotary piston engine.

11. Use according to claim 10 in a drive or turbine in a passenger transport vehicle, in particular in aircraft such as passenger planes and unmanned aircraft.

## Revendications

1. Matériau métallique léger ayant une résistance à la traction à température ambiante ≥ 180 MPa, déterminée selon la norme ISO 527-2, le matériau en alliage léger comprenant
a) un alliage d'aluminium,
dans lequel l'alliage d'aluminium comprend comme autre composant d'alliage quatre composants choisis dans le groupe constitué par le silicium (Si), le scandium (Sc), le cuivre (Cu), le magnésium (Mg), le nickel (Ni), le vanadium (V), le titane (Ti), le zirconium (Zr), l'ytterbium (Y), le manganèse (Mn), le hafnium (Hf), le niobium (Nb), le tantale (Ta) ou leurs mélanges en une quantité de 0,5 à 35,0 % en poids. par élément, sur la base du poids total de l'alliage d'aluminium, l'aluminium (Al) dans une quantité de 60,0 à 95,0 % en poids, par rapport au poids total de l'alliage d'aluminium, éventuellement au moins un autre élément choisi dans le groupe comprenant le zinc (Zn), le lithium (Li), l'argent (Ag), le titane (Ti), le tantale (Ta), le cobalt (Co), Chrome (Cr), ytterbium (Y), lanthane (La), europium (Eu), néodyme (Nd), gadolinium (Gd), terbium (Tb), dysprosium (Dy), erbium (Er), praséodyme (Pr), cérium (Ce) ou des mélanges de ceux-ci en quantité comprise entre 0,01 et 1,0 % en poids. - par élément, sur la base du poids total de l'alliage d'aluminium, et des impuretés, la somme des composants de l'alliage étant de 100 % en poids, et
b) des nanoparticules dispersées dans l'alliage d'aluminium en une quantité de 0,1 à 15,0 % en poids, par rapport au poids total du matériau en métal léger
dans laquelle les nanoparticules ont un diamètre de 10 à 1000 nm et les nanoparticules comprennent un matériau choisi dans le groupe comprenant le carbone, l'alumine, la zircone, la zircone stabilisée à l'yttrium, l'oxyde de cérium, l'oxyde de lanthane et leurs mélanges.

2. Le matériau métallique léger selon la revendication 1, dans lequel les nanoparticules ont un diamètre de 15 à 500 nm, de préférence de 20 à 250 nm et de préférence de 25 à 100 nm.

3. Le matériau métallique léger selon l'une quelconque des revendications précédentes, dans lequel le matériau en métal léger comprend les nanoparticules en une quantité de 0,1 à 12,0 % en poids par rapport au poids total du matériau en métal léger.

4. Le matériau métallique léger selon la revendication 1, dans lequel les nanoparticules comprenant du carbone sont choisies dans le groupe comprenant les fullerènes, les nanotubes de carbone, les graphanes, les graphènes, les graphites et leurs mélanges.

5. Le matériau métallique léger selon l'une des revendications précédentes, dans lequel le matériau en métal léger a une résistance à la traction de ≥ 90 MPa à une température de 250°C, déterminée selon la norme ISO 527-2.

6. Le matériau métallique léger selon l'une des revendications précédentes, la le matériau métallique léger est obtenu par un procédé conforme à l'une des revendications 7 à 9.

7. Procédé de production d'un matériau en métal léger selon l'une quelconque des revendications 1 à 6, le procédé comprenant
a) Fournir un alliage d'aluminium selon la revendication 1,
b) Fourniture de nanoparticules selon l'une des revendications 1 à 4,
c) mettre en contact l'alliage d'aluminium de l'étape a) avec les nanoparticules de l'étape b) pour produire un matériau métallique léger comprenant l'alliage d'aluminium et les nanoparticules qui y sont distribuées, et
d) le traitement thermique du matériau en métal léger obtenu à l'étape c) dans une plage de température de 100 à 1200 °C.

8. Procédé selon la revendication 7, dans lequel le matériau en métal léger de l'étape c) est produit par un procédé choisi dans le groupe comprenant les procédés de forgeage, les procédés de moulage, les procédés d'extrusion de la métallurgie des poudres, les procédés générateurs de la métallurgie des poudres, tels que la fabrication de couches additives (ALM), les procédés à lit de poudre, les procédés à faisceau laser, les procédés à faisceau d'électrons, les procédés à poudre laser ou les buses laser, et les procédés non métallurgiques à poudre, tels que les procédés à fil laser ou à fil plasma.

9. Procédé selon la revendication 7 ou 8, dans lequel le traitement thermique de l'étape d) est effectué sous gaz inerte ou sous vide pendant une durée de 10 min à 50 h et/ou en plusieurs étapes et/ou stades.

10. Utilisation d'un matériau en métal léger selon l'une des revendications 1 à 6 comme composant de piston dans un moteur à piston rotatif.

11. Utilisation selon la revendication 10 dans un entraînement ou une turbine d'un véhicule de transport de passagers, en particulier dans des aéronefs tels que les avions de passagers et les avions sans pilote.
